# EUROPEAN PATENT APPLICATION

(11) **EP 4 060 083 A1**
(43) Date of publication of application: **21.09.2022**
(21) Application number: 21163314.4
(22) Date of filing: 18.03.2021
(51) Int. Cl.: C25B 1/04, C25B 1/23, C25B 3/26, H02J 1/08, H02J 3/28, H02J 3/38, H02J 15/00

(54) **ELECTROLYSIS UNIT, SYSTEM AND METHOD**

(71) Applicant: Siemens Energy Global GmbH & Co. KG, 81739 München (DE)
(72) Inventor: Fleischer, Maximilian, 85635 Höhenkirchen (DE); Thiemann, Thomas, 45659 Recklinghausen (DE)

(57) **Abstract**

The present invention relates to the generation of an electrolysis product (6), in particular to an electrolysis unit (1), an electrolysis system (100) and a method for generating an electrolysis product (6). An electrolysis assembly (2) and a photovoltaic assembly (3) are provided. The electrolysis assembly (2) comprises a plurality of electrolysis cells (5) configured to generate, upon provision of a direct current, an electrolysis product (6) from a supply medium (7). The photovoltaic assembly (3) is electrically connected to the electrolysis assembly (2) for operating the electrolysis cells (5) of the electrolysis assembly (2) based on direct current generated by the photovoltaic assembly (3).

## Description

The present invention relates to the generation of an electrolysis product, in particular to an electrolysis unit, an electrolysis system and a method for generating an electrolysis product.

Electrolysis is a widely known electro-chemical method, wherein a direct (electrical) current DC is used to drive an otherwise non-spontaneous chemical reaction. It has gotten recent attention as a factor in fighting climate change, as it may be utilised in so-called "power to X" processes. In these processes, electrical energy converts generally a supply medium (such as water or CO₂) into chemical energy via electrolysis. The electrolysis products containing this energy range from e.g. hydrogen H₂ (with O₂ as by-product) over small hydrocarbons like methane CH₄ (also termed "synthetic natural gas" SNG or synthetic LNG in its liquid form), Ethylene C₂H₄ or Ethanol C₂H₅OH) to ammonia NH₃ or carbon monoxide CO. These molecules may be used as fuel, e.g. for corresponding vehicles or generators, or as feedstock for the chemical industry.

A currently established industrial procedure is to generate renewable electrical energy, transport this energy via the electrical (public) power grid to an electrolyser and then produce these electrolysis products out of a supply medium, e.g. water H₂O, carbon dioxide CO₂ or nitrogen N₂. This procedure provides the advantage of a certain spatial decoupling of renewable energy generation and the generation of the electrolysis products.

It is an object of the present invention to improve the generation of an electrolysis product, in particular to increase the efficiency of this process, simplify intermediate electrical components and/or reduce the overall costs.

This object is solved by an electrolysis unit, an electrolysis system and a method for generating an electrolysis product according to the independent claims.

Preferred embodiments of the invention are subject to the dependent claims and the following description.

An electrolysis unit according to a first aspect of the invention comprises an electrolysis assembly and a photovoltaic assembly. The electrolysis assembly comprises a plurality of electrolysis cells configured to generate, upon provision of a direct electrical current, an electrolysis product from a supply medium. The photovoltaic assembly is electrically connected, in particular directly e.g. via corresponding interface components, to the electrolysis assembly for operating the electrolysis cells of the electrolysis assembly based on direct electrical current generated by the photovoltaic assembly.

An aspect of the invention is based on the approach of combining a photovoltaic assembly, preferably consisting of a plurality of photovoltaic modules, with an electrolysis assembly comprising a plurality of electrolysis cells in a single electrolysis unit. The electrolysis unit is preferably configured to operate the electrolysis assembly on the direct current generated by the photovoltaic assembly when exposed to electromagnetic radiation, in particular sunlight. In other words, the photovoltaic assembly is advantageously directly electrically coupled e.g. via corresponding interface components to the electrolysis assembly, wherein the electrical coupling is configured to transmit the direct current generated by the photovoltaic assembly directly to the electrolysis assembly via interface components. This means that no conversion of the generated direct current into an alternating current, and/or no significant (e.g. larger than a factor of 5) transformation of the corresponding electrical voltage, between the photovoltaic assembly and the electrolysis assembly is necessary. Accordingly, in contrast to conventional solutions where electrical energy is transmitted to an electrolyser via a power grid, the provision of electrical energy to the electrolysis assembly becomes much more simple. For example, the number of components necessary for supplying the electrolysis assembly with power can be reduced. Also, energy losses by current/voltage transformation(s) can be avoided. This allows for a gain in efficiency.

The electrolysis assembly comprising the plurality of electrolysis cells may be configured as an electrolyser, in particular an industrial electrolyser. Each electrolysis cell preferably comprises at least two electrodes, in particular at least one negative electrode and at least one positive electrode, and may be supplied with a supply medium, for example water H₂O, carbon dioxide CO₂, or nitrogen N₂. From the supply medium, an electrolysis product may be generated upon application of direct current to the electrolysis cell, in particular the at least two electrodes.

It is preferred when the electrolysis assembly comprises more than 10 electrolysis cells, in particular between 50 and 1000, allowing an economic production of the electrolysis product. Advantageously, the electrolysis cells are connected in series, allowing the application of large electrical voltages.

The electrolysis product preferably contains a high amount of energy. For example, the electrolysis product may comprise energy containing molecules, also termed high-energy molecules, which allow for the controlled release of energy upon another chemical reaction. Alternatively, the electrolysis product may be suitable for a chemical production reaction, in particular thermochemical reaction, with another reaction substance to generate an output product containing the high amount of energy, for example energy containing molecules. The electrolysis assembly, in particular each of the plurality of electrolysis cells, preferably comprises an inlet port for coupling to a supply line, the supply line being configured to provide the supply medium. Additionally, the electrolysis assembly, in particular each of the plurality of electrolysis cells, preferably comprises an outlet port for coupling to a collection line, the collection line being configured to collect the electrolysis product.

Preferably, the electrolysis unit is configured as a modular unit. In other words, the electrolysis unit may be configured to form an electrolysis system with a plurality of further electrolysis units. In particular, the electrolysis unit may be configured to be operated in parallel with the plurality of further electrolysis units, wherein the respective electrolysis assemblies are connected via the supply line and the collection line. Accordingly, the supply line is preferably a common supply line configured to supply a plurality of electrolysis units, and/or the collection line is preferably a common collection line configured to collect the electrolysis product from a plurality of electrolysis units.

Preferred embodiments of the invention and further aspects thereof are described below, each of which, unless expressly excluded, may be combined with each other and with the aspects of the invention described below as desired.

In a preferred embodiment, the photovoltaic assembly comprises a plurality of photovoltaic modules, i.e. at least two photovoltaic modules, electrically connected in series. In particular, the photovoltaic assembly may comprise a plurality of photovoltaic units, each photovoltaic unit comprising a plurality of photovoltaic modules electrically connected in series. By this means, the electrical voltage provided by the photovoltaic assembly can be increased. Accordingly, the electrolysis assembly, in particular the plurality of electrolysis cells, can be readily provided with its operating voltage. In this embodiment, a DC/DC converter in order to adapt the voltage provided by the photovoltaic assembly to the required operating voltage of the electrolysis assembly is not necessarily required.

For example, the photovoltaic assembly may comprise between 3 and 40, preferably more than 10, in particular between 20 and 40, photovoltaic modules electrically connected in series, or even a plurality of photovoltaic units each comprising between 3 and 40 photovoltaic modules electrically connected in series. Each of the photovoltaic modules preferably provides a voltage in the range between 20 V and 200 V. Thus, by connecting the 3 to 40 photovoltaic modules in series, a total voltage of about several hundred volts, in particular up to 2 kV, can be achieved. Accordingly, a conventional modern industrial electrolyser comprising 30 to 100 electrolysis cells stacked together, with each electrolysis cell requiring a voltage of 1.5 V up to 4 V, typically 2.5 V, can be operated reliably without requiring any voltage transformation.

In another preferred embodiment, the photovoltaic assembly comprises a plurality of photovoltaic modules, i.e. at least two photovoltaic modules, electrically connected in parallel. In particular, the photovoltaic assembly may comprise a plurality of photovoltaic units electrically connected in parallel, wherein each photovoltaic unit comprises a plurality of photovoltaic modules. By this means, the direct current provided by the photovoltaic assembly may be readily increased. Accordingly, the electrolysis assembly, in particular each of the plurality of electrolysis cells, may be operated efficiently, in particular in a cost effective manner.

For example, the photovoltaic assembly may comprise between 100 and 1000 photovoltaic modules electrically connected in parallel, or even between 100 and 1000 photovoltaic units electrically connected in parallel. A single of these photovoltaic modules preferably provides a direct current of about 10 A. Thus, by connecting the cells or units, respectively, in parallel, a total direct current in the range of 1 kA to 10 kA can be achieved. Accordingly, a modern industrial electrolyser comprising between 30 and 100 electrolysis cells stacked together, with each electrolysis cell operating on a current density between 0.1 A/cm² and 5 A/cm² and providing an electrolysis area of 0.1 m² to 5 m², typically 1 m², can be operated efficiently at the required current densities.

In yet another preferred embodiment, the electrolysis assembly comprises at least one of the following configurations:
(i) more than 10 photovoltaic modules, preferably between 20 and 200 photovoltaic modules, are electrically connected in parallel and form a photovoltaic group;
(ii) more than 10 photovoltaic groups, preferably between 20 and 40 photovoltaic groups, are electrically connected in series;
(iii) more than 10 photovoltaic modules, preferably between 20 and 40 photovoltaic modules, are electrically connected in series and form a photovoltaic group;
(iv) more than 10 photovoltaic groups, preferably between 20 and 200 photovoltaic groups, are electrically connected in parallel.

By means of these configurations, a modular photovoltaic assembly can be realized, wherein the voltage level and/or the direct current level can be tailored to power requirements of the electrolysis assembly.

In yet another preferred embodiment, a main power line is connected to the electrolysis assembly. A first power collection unit of the main power line preferably has positive polarity with respect to a common line with ground potential, whereas a second power collection unit of the main power line has preferably negative polarity with respect to the common line with ground potential. Preferably, a number of the plurality of photovoltaic modules are electrically connected to the first power collection unit and a same number of the plurality of photovoltaic modules are electrically connected to the second power collection unit. It is particularly preferred that from each photovoltaic unit, one photovoltaic module is electrically connected to the first power collection unit and another photovoltaic module is electrically connected to the second power collection unit. By this means, the electrical direct current provided by the plurality of photovoltaic modules or photovoltaic units, respectively, electrically connected in parallel can be routed efficiently to the electrolysis assembly, and insulation effort with respect to ground potential can be reduced.

In yet another preferred embodiment, the photovoltaic assembly comprises a plurality of photovoltaic units electrically connected in parallel, wherein each of the photovoltaic units comprises a plurality of photovoltaic modules electrically connected in series. Preferably, each of the photovoltaic units is electrically connected to the main power line. The provision of a plurality of photovoltaic units allows for provision of a proper electrical voltage and a proper current level for coupling of the cells to an electrolysis assembly comprising a plurality of electrolysis cells, in particular to an industrial electrolyser comprising 30 to 100 stacked electrolysis cells.

In yet another preferred embodiment, the electrolysis unit comprises a regulation assembly. The regulation assembly is preferably electrically arranged in between the photovoltaic assembly and the electrolysis assembly. Further preferably, the regulation assembly is configured to adjust the provision of electrical energy, in particular the application of electrical voltage and/or current, to the electrolysis assembly. In particular, the regulation assembly may be configured to adjust the provision of electrical energy generated by the photovoltaic assembly to the electrolysis assembly. For example, the regulation assembly may be configured to increase the voltage applied to the electrolysis assembly, e.g. by transformation, if the voltage provided by the photovoltaic assembly drops, e.g. due to unfavourable weather conditions or ageing. Vice versa, the regulation assembly may be configured to decrease the voltage applied to the electrolysis assembly, e.g. by transformation, if the voltage provided by the photovoltaic assembly raises above the required operating voltage of the electrolysis assembly, e.g. due to excellent weather conditions. Accordingly, the electrolysis assembly, in particular each of the plurality of electrolysis cells, can be operated at its optimal operating point and/or protected from overvoltage.

Preferably, the regulation assembly comprises a control unit and a power splitter (also termed power switch), the control unit being configured to control the power splitter to selectively switch electrical voltage and direct current to the electrolysis assembly according to a predefined target function. By this means, the electrolysis assembly may be optimally driven.

For example, the target function may correspond to a maximum performance of the electrolysis assembly, grid services, component life-time optimization or minimum degradation, respectively.

In yet another preferred embodiment, the regulation assembly comprises (i) a regulation power line running electrically parallel to a main power line between the photovoltaic assembly and the electrolysis assembly, and (ii) a DC/DC converter electrically arranged in said regulation power line. The regulation assembly is preferably configured to, in particular selectively, split off a part of the electrical direct current generated by the photovoltaic assembly into the regulation power line. Further, the regulation assembly is preferably configured to, in particular selectively, add an output voltage of the DC/DC converter to a voltage in the main power line. The splitting off of only a part of the generated electrical direct current accordingly allows for regulation of the voltage applied to the electrolysis assembly while keeping the power loss due to the conversion in a negligible range.

In yet another preferred embodiment, the regulation assembly is configured to adjust the electrical voltage applied to the electrolysis assembly, in particular the electrical voltage added to the voltage in the main power line, based on an operating state of the photovoltaic assembly and/or an operating state of the electrolysis assembly. Preferably, the regulation assembly is configured to adjust the electrical voltage applied to the electrolysis assembly based on photovoltaic data provided by the photovoltaic assembly and/or electrolysis data provided by the electrolysis assembly. The photovoltaic data preferably characterizes the operating state of the photovoltaic assembly, in particular the provided electrical voltage and/or the provided direct current. The electrolysis data preferably characterizes the operating state of the electrolysis assembly, in particular the power requirement, the temperature, and/or the pressure of or in the electrolysis assembly or the plurality of electrolysis cells, respectively. Thus, it can be made sure that while the photovoltaic assembly operates as efficiently as possible (i.e. generates as much power as currently possible), the electrolysis assembly is provided with the optimum operating power. In particular, it becomes possible to operate the photovoltaic assembly in the maximum power point for the current amount of incident electromagnetic radiation, even if this means that the generated voltage is - e.g. due to unfavourable weather conditions and corresponding low incident radiation - below the required voltage level for operation of the electrolysis assembly.

In yet another preferred embodiment, the peak power output of the photovoltaic assembly is higher than the power requirement, e.g. the average power consumption, of the electrolysis assembly. Thus, even in less ideal conditions, e.g. during cloudy weather, at dusk/dawn, etc., when the photovoltaic assembly cannot provide the peak power output, the full potential of the electrolysis assembly can be used. The amount of electrolysis product can thus be increased, at least to a certain extent, by enlarging the photovoltaic assembly without the need to provide an additional electrolyser/electrolysis unit. This is advantageous also because the effort for installing photovoltaic modules, in particular the investment costs for photovoltaic per kW (peak), is in general lower than the effort for installing electrolysers, in particular the investment costs for electrolysis per kW.

It has been found that for a particular efficient electrolysis unit, the peak power output of the photovoltaic assembly is preferably 2 to 8, in particular 4, times higher than the power requirement of the electrolysis assembly. By this means, an overbuild of the photovoltaic capacity may be achieved which allows for substantially sustained operation of the electrolysis assembly during daytime, without increasing the effort, e.g. the number of required components and/or costs, for installing the additional photovoltaic capacity too much.

In yet another preferred embodiment, the electrolysis unit comprises an energy storage unit, in particular for storage of electrical energy, for example a battery. The energy storage unit is preferably configured to (i) store at least a part of the electrical energy provided by the photovoltaic assembly in a first operating mode and (ii) to provide the electrolysis assembly with at least a part of the stored electrical energy in a second operating mode. For example, the energy storage unit may be used to provide protective voltages for maintaining stability and proper function of the electrolysis assembly at all times, in particular during night. Such an energy storage unit thus enables substantially sustained, power grid independent operation (also termed "island operation") of the electrolysis assembly. For example, the electrolysis unit might be deployed in sun rich regions with little infrastructure, e.g. in deserts or on offshore installations. In this context, it is also advantageous that effort, e.g. in terms of component parts and costs, associated with connecting the electrolysis assembly to a power grid can be saved.

Also, the provision of an energy storage unit allows for efficient use of the generated electrical energy. If the electrical power generated by the photovoltaic assembly exceeds the peak power consumption of the electrolysis assembly, e.g. during time of intensive incident electromagnetic radiation, the excess energy does not have to be wasted, but can be stored instead. Vice versa, if the power generated by the photovoltaic assembly does not meet the power requirements of the electrolysis assembly, e.g. during unfavourable weather conditions or at dusk or dawn, respectively, the electrolysis assembly can be efficiently operated nevertheless. Preferably, the energy storage unit comprises a storage capacity which allows for substantially continuous operation of the electrolysis assembly, e.g. even during night.

In yet another preferred embodiment, the electrolysis assembly is connectable to a, preferably public, power grid and configured to operate at least partly with electrical power provided by the power grid. For example, the electrolysis assembly may be configured to draw electrical power from the power grid in order to provide a protective voltage to the electrolysis assembly when the photovoltaic assembly is inoperative, e.g. during night, and/or in order to supplement the power generated by the photovoltaic assembly. Accordingly, even if the power generated by the photovoltaic assembly does not meet the power requirements of the electrolysis assembly, e.g. during unfavourable weather conditions, the electrolysis assembly can be efficiently operated nevertheless.

In yet another preferred embodiment the photovoltaic assembly is arranged (i) above the electrolysis assembly, e.g. on a top side of the electrolysis assembly, or (ii) laterally adjacent to the electrolysis assembly. For example, the photovoltaic assembly may be mounted on a scaffold or at least on posts such that the electrolysis assembly may be arranged directly below the photovoltaic assembly, in particular the plurality of photovoltaic modules constituting the photovoltaic assembly. By this means, space can be saved, as additional installation area for the electrolysis assembly is not required. Alternatively, the electrolysis assembly may be arranged laterally around or in between the photovoltaic assembly, in particular laterally around or in between the plurality of photovoltaic modules. For example, the photovoltaic assembly may be arranged in a star arrangement or another similar topology, while the electrolysis assembly being arranged in the middle. By this means, effort and costs for installation and cabling can be reduced.

An electrolysis system according to a second aspect of the invention comprises a plurality of electrolysis units, in particular a plurality of inventive electrolysis units. Therein, each electrolysis unit comprises an electrolysis assembly having a plurality of electrolysis cells configured to generate, upon provision of a direct electrical current, an electrolysis product from a supply medium. Each electrolysis unit further comprises a photovoltaic assembly being electrically coupled, in particular directly, to the (corresponding) electrolysis assembly of the same unit for operating the electrolysis cells of the electrolysis assembly based on direct electrical current generated by the photovoltaic assembly.

Advantageously, the electrolysis system also comprises a supply line configured to provide the supply medium, and a collection line configured to collect the electrolysis product. Preferably, the plurality of electrolysis assemblies, in particular the plurality of electrolysis cells of each one of the assemblies, each comprise an inlet port coupled to the supply line and an outlet port coupled to the collection line. Further preferably, each of the electrolysis assemblies, in particular each of the plurality of electrolysis cells, is configured to generate the electrolysis product based on the supply medium provided via the supply line and to discharge the generated electrolysis product via the collection line. Accordingly, the supply medium can be distributed easily and efficiently between the plurality of electrolysis assemblies. In particular, there may be only one supply line necessary to supply all electrolysis assemblies at the same time. Vice versa, the electrolysis product can be collected efficiently from the plurality of electrolysis assemblies. In particular, there may be only one collection line necessary to collect the electrolysis product from all electrolysis assemblies.

Preferably, the electrolysis system further comprises a storage assembly, e.g. a storage tank, configured to store the electrolysis product collected via the collection line. By this means, the electrolysis system can be operated even in remote areas.

Alternatively or additionally, the electrolysis system may comprise a reactor assembly to generate a reaction product from the electrolysis product and an additional reaction substance. By this means, it can be achieved that an output of the electrolysis system contains high-energy molecules and may thus be used e.g. as a synthetic fuel, even if the electrolysis product itself does not contain such high-energy molecules at first.

In another preferred embodiment, the collection line is configured to conduct a fluidic electrolysis product, e.g. an electrolysis product under pressure. By this means, the generated electrolysis product can be pressurised and thereby fluidized already at each of the electrolysis assemblies. To this end, the electrolysis assemblies preferably comprise a plurality of pressurizable electrolysis cells, such that the electrolysis product can be generated under pressure. Alternatively or additionally, each of the electrolysis units comprises a compressor arranged between the electrolysis assembly and the collection line, the compressor being configured to fluidize the electrolysis product before it is discharged into the collection line. By this means, the need for expensive high-volume-flow compressor stages at the storage assembly may be eliminated.

A method for generating an electrolysis product with an electrolysis unit, in particular with the electrolysis unit according to the first aspect of the invention, according to a third aspect of the invention comprises: (i) converting electromagnetic radiation, in particular light, into direct electrical current by means of an photovoltaic assembly; and (ii) generating the electrolysis product by means of an electrolysis assembly comprising a plurality of electrolysis cells from a supply medium by providing the direct electrical current generated by means of the photovoltaic assembly to the plurality of electrolysis cells.

The properties, features and advantages of the invention described above, as well as the manner in which they are achieved, will be explained in more detail in connection with the figures in the following description of examples. Where appropriate, the same reference signs are used in the figures for the same or corresponding elements of the invention. The examples serve to explain the invention and do not limit the invention to the combinations of features indicated therein, even with respect to functional features. Moreover, any of the features disclosed in the examples below may be considered in isolation and suitably combined with the features of any of the above embodiments and their further aspects.

It is shown in
- FIG 1: an example of an electrolysis unit comprising a photovoltaic assembly, the photovoltaic assembly having a plurality of photovoltaic modules;
- FIG 2: an example of a system comprising a plurality of electrolysis units;
- FIG 3: an example of an electrolysis unit comprising a regulation assembly;
- FIG 4: an example of an electrolysis unit comprising an energy storage unit and being connectable to a power grid; and
- FIG 5: an example of the operation of an electrolysis unit.

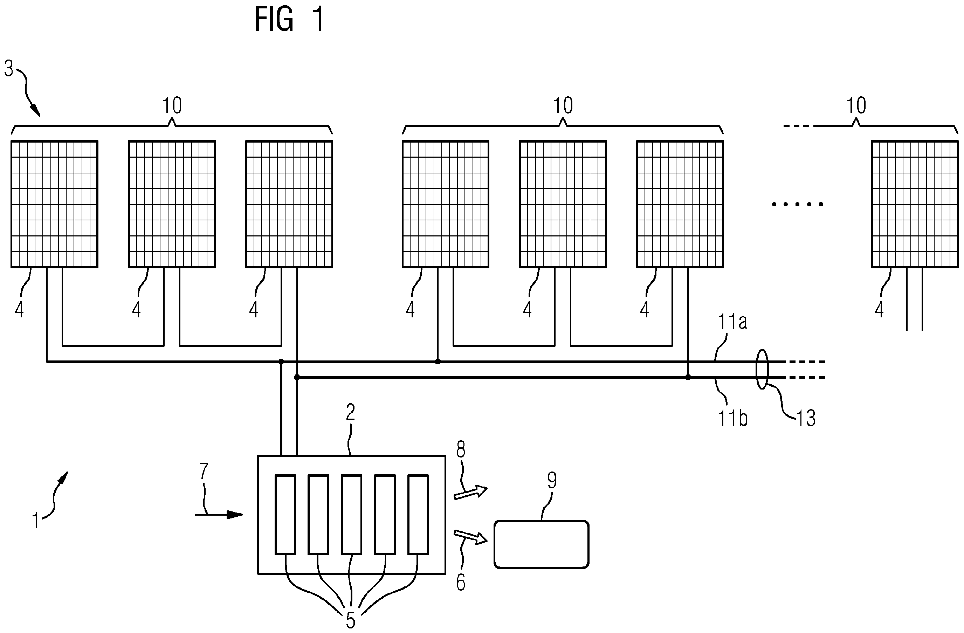

FIG 1 shows an example of an electrolysis unit 1 comprising an electrolysis assembly 2 and a photovoltaic assembly 3. The photovoltaic assembly 3 comprises a plurality of photovoltaic modules 4. The electrolysis assembly 2 comprises a plurality of electrolysis cells 5 each configured to generate, upon provision with direct current generated by the photovoltaic assembly 3, an electrolysis product 6 from a supply medium 7 along with a side product 8. In the present example, the electrolysis unit 1 comprises an optional storage assembly 9 configured to store the generated electrolysis product 6.

Preferably, the plurality of photovoltaic modules 4 are electrically connected in series and in parallel at the same time. To this end, the plurality of photovoltaic modules 4 are arranged in a plurality of photovoltaic units 10, wherein each photovoltaic unit 10 comprises a plurality of photovoltaic modules 4 electrically connected in series. In the present example, each photovoltaic unit 10 comprises three photovoltaic modules 4. However, it is conceivable that each photovoltaic unit 10 comprises up to 20 photovoltaic modules 4, in order to raise the electrical voltage generated by the photovoltaic units 10 to level which is suitable for efficient operation of the electrolysis assembly 2. For example, if the electrolysis assembly 2 comprises 30 to 100 electrolysis cells 5, and each cell operates at a voltage between 1.5 V and 4 V, e.g. 2.5 V, then 3 to 20 photovoltaic modules 4 connected in series may be advantageously provided to boost the voltage from 20 V to 200 V of a single photovoltaic module 4 to several hundred volts, even up to 2 kV required for a particularly sustained operation the electrolysis assembly 2.

In order to efficiently provide this electrical voltage to the electrolysis assembly 2, the electrolysis unit 1 preferably comprises a pair of power collection units 11a, 11b , constituting a main power line 13 for transmitting electrical energy produced by the photovoltaic assembly 3 to the electrolysis assembly 2. From each photovoltaic unit 10, one photovoltaic module 4, in particular the first one of the series, may be electrically connected to a first power collection unit 11a of the main power line 13, and another one photovoltaic module 4, in particular the last one of the series, may be electrically connected to a second power collection unit 11b of the main power line 13.

Such coupling of the photovoltaic assembly 3 to the main power lines 13 is particularly easy to achieve if, as in the present example, the different photovoltaic units 10 are electrically connected in parallel. This not only facilitates coupling to the main power lines 13, but also allows for boosting of the direct current generated by each photovoltaic unit 10.

For example, the electrolysis unit 1 may comprise between 100 and 1000 photovoltaic units 10 in order to provide a total electrical direct current in the range of 1 kV to 10 kV. Such current levels are required to efficiently operate an electrolysis assembly having 30 to 100 electrolysis cells 5 stacked together, thereby providing an electrolysis area of 0.1 m² to 5 m² to which current densities in the range between 0.1 A/cm² and 5 A/cm² are applied advantageously.

With such an electrolysis unit 1, for example hydrogen H₂ may efficiently be produced as an electrolysis product 6 from water H₂O as the supply medium 7. As a side product 8 from the electrolysis process, oxygen O₂ is produced. However, a different supply medium 7 such as carbon dioxide CO₂ or nitrogen N₂ may be provided as well, enabling the production of carbon monoxide CO, hydrocarbons such as methane CH₄ or ammonia NH₃' respectively.

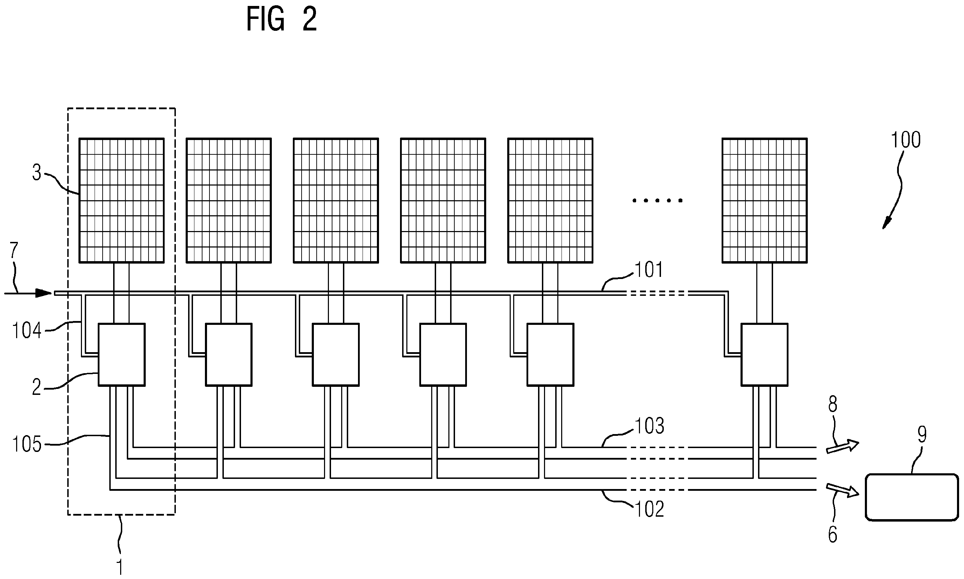

FIG 2 shows an example of an electrolysis system 100 comprising a plurality of electrolysis units 1. Each of the electrolysis units 1 comprises an electrolysis assembly 2 for generating an electrolysis product 6 from a supply medium 7, and a photovoltaic assembly 3. The photovoltaic assembly 3 is configured to provide a direct current to the respective electrolysis assembly 2 for driving the respective electrolysis process. For reasons of clarity, reference numerals are only indicated for one of the electrolysis units 1, which is highlighted by a dashed frame in FIG 2.

The electrolysis system 100 further comprises a supply line 101 for supplying each electrolysis assembly 2 with the supply medium 7, for example water H₂O, and a collection line 102 for collecting the electrolysis product 6 from each electrolysis assembly 2. In the present example, the collection line 102 conducts the electrolysis product 6 to an optional storage assembly 9, for example a storage tank. In order to collect a side product 8 of the electrolysis process, a further collecting line 103 may be provided as well.

Preferably, the electrolysis assemblies 2 are connected to the supply line 101 in parallel as shown in the example. To this end, each electrolysis assembly 2 comprises an inlet port 104 coupled to the supply line 101. This allows particularly efficient distribution of supply medium 7. In particular, the electrolysis system 100 may resume operation even if one of the electrolysis units 1 becomes inoperative. For reasons of clarity, only one of the inlet ports 104 is indicated in FIG 2.

Likewise, the electrolysis assemblies 2 are preferably connected to the collection line 102 in parallel, for example via outlet ports 105 coupled to the collection line 102. This allows particularly efficient collection of the electrolysis product 6. For reasons of clarity, only one of the outlet ports 105 is indicated in FIG 2.

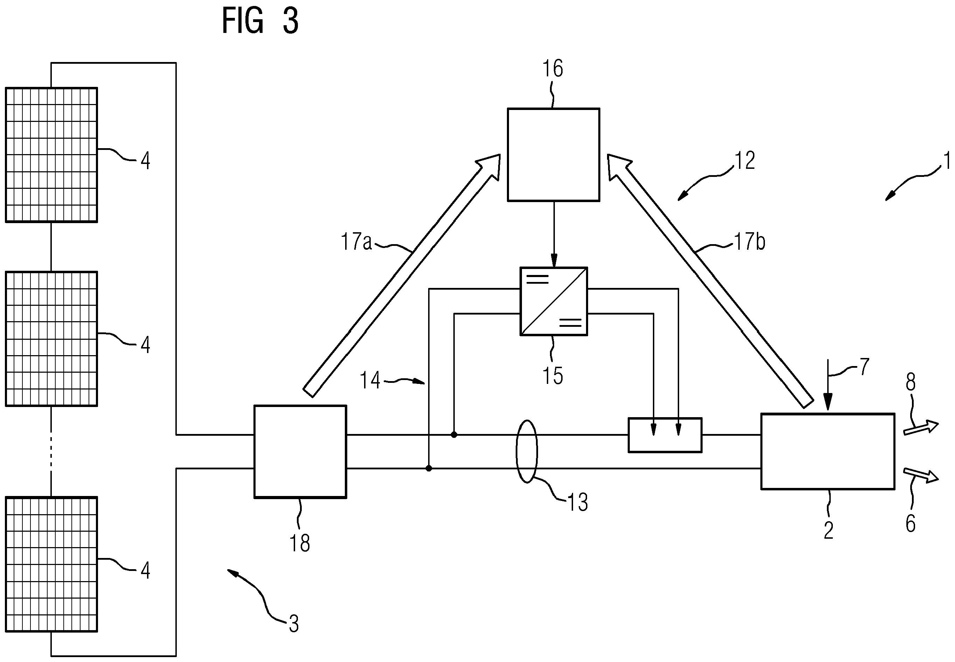

FIG 3 shows an example of an electrolysis unit 1 comprising an electrolysis assembly 2 for generating an electrolysis product 6 from a supply medium 7 via electrolysis, possibly along with a side product 8, a photovoltaic assembly 3 for providing a direct current via a main power line 13 to the electrolysis assembly 2 in order to drive the electrolysis, and a regulation assembly 12 for adjusting the provision of electrical energy to the electrolysis assembly 2.

Although not shown explicitly in the present example, the photovoltaic assembly 3 may comprise not only a plurality of photovoltaic modules 4 electrically connected in series, but also a plurality of photovoltaic units electrically connected in parallel (cf. FIG 1).

The regulation assembly 12 comprises a regulation power line 14, a DC/DC converter 15, and a control unit 16. The regulation assembly 12 is configured to split off a part of the direct current generated by the photovoltaic assembly 3, and route it into the regulation power line 14. The regulation assembly 12 is further configured to add an output voltage of the DC/DC converter 15 electrically arranged in the regulation power line 14 to a voltage in the main power line 13.

The control unit 16 is preferably configured to adjust the amount of direct current split off from the main power line 13, for example by accordingly controlling the DC/DC converter 15. Alternatively or additionally, is also conceivable that the control unit 16 is configured to actuate an according power splitter (not shown) in the main power line 13, in particular according DC power electronics.

In the present example, the control unit 16 is configured to adjust the provision of electrical energy to the electrolysis assembly 2 based on an operating state of the electrolysis assembly 2 and/or based on an operating state of the photovoltaic assembly 3. For example, the control unit 16 may be configured to receive photovoltaic data 17a from the photovoltaic assembly 3, in particular from a regulation unit 18 of the photovoltaic assembly 3. The photovoltaic data 17a preferably characterise the operating state of the photovoltaic assembly 3, in particular the electric voltage and/or the direct current level provided by the photovoltaic assembly 3. Such regulation units 18 are also termed "maximum power point tracker" and are usually provided for ensuring that the respective photovoltaic assembly 3 operates at its maximum power output.

Likewise, the control unit 16 may be configured to receive electrolysis data 17b from the electrolysis assembly 2, the electrolysis data 17b preferably characterising the operating state of the electrolysis assembly 2. For example, the electrolysis data 17b may contain information about the power consumption, the temperature and/or the pressure of or in the electrolysis assembly 2, respectively.

Accordingly, the control unit 16 may adapt the operation of the DC/DC converter 15 to the requirements of the electrolysis assembly 2 and/or the performance of the photovoltaic assembly 3.

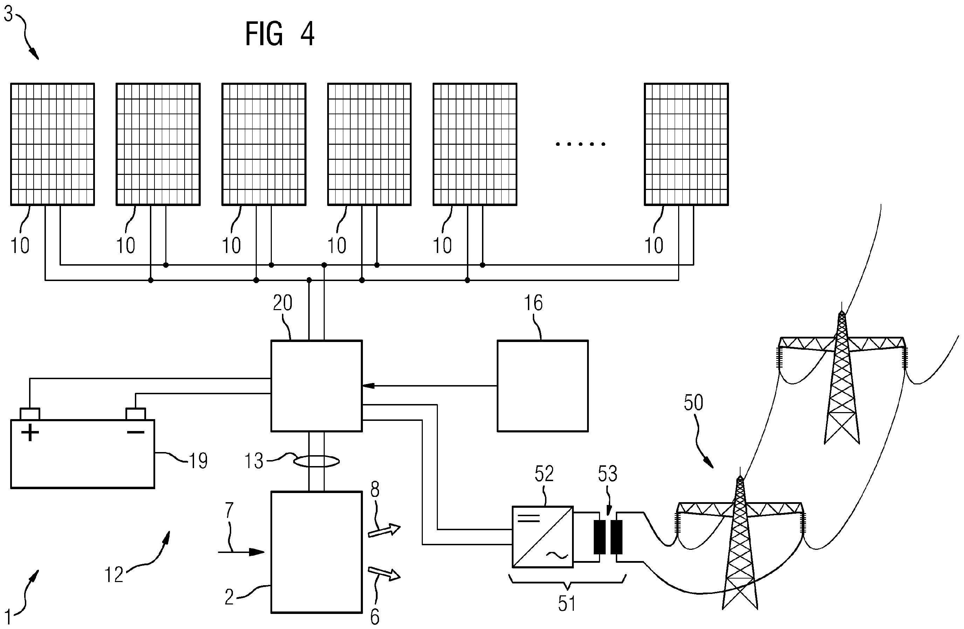

FIG 4 shows an example of an electrolysis unit 1 comprising an energy storage unit 19 and being connectable to a power grid 50 via a power grid interface 51. The electrolysis unit 1 further comprises an electrolysis assembly 2 configured to generate an electrolysis product 6 from a supply medium 7, possibly along with a side product 8, and a photovoltaic assembly 3. The electrolysis assembly 2 is preferably electrically coupled to the photovoltaic assembly 3 via a main power line 13. In the present example, the photovoltaic assembly 3 comprises a plurality of photovoltaic units 10 electrically connected in parallel, wherein each photovoltaic unit 10 may comprise a plurality of photovoltaic modules (not shown) electrically connected in series.

The power grid interface 51 exemplarily comprises an inverter 52 for converting the electrical direct current on the side of the electrolysis unit 1 into electrical alternating current on the side of the power grid 50 and/or vice versa. Additionally, the power grid interface 51 may comprise a transformer 53 for adapting the electrical voltage on the side of the electrolysis unit 1 to the voltage of the power grid 50 and/or vice versa.

The energy storage unit 19, for example a battery, is configured to store energy generated by the photovoltaic assembly 3, in particular the electrical energy. Preferably, the energy storage unit 19 is part of a regulation assembly 12, the regulation assembly 12 being arranged in the main power line 13 and configured to adjust the electric energy provided to the electrolysis assembly 2.

Similar to the regulation assembly 12 shown in FIG 3, the regulation assembly 12 comprises a control unit 16. In the present example, the control unit 16 is configured to control a power splitter 20, for example in form of DC power electronics, arranged in the main power line 13. The power splitter 20 is preferably configured to selectively route direct electrical current generated by the photovoltaic assembly 3 to the electrolysis assembly 2, to the energy storage unit 19 and/or the power grid 50, in particular to distribute the electrical direct current between the electrolysis assembly 2, the energy storage unit 19 and the power grid 50. Alternatively or additionally, the power splitter 20 may be configured to route, in particular distribute, direct current from the energy storage unit 19 to the electrolysis assembly 2 and/or the power grid 50, and/or route, in particular distribute, direct current from the power grid 50 (after rectification) to the electrolysis assembly 2 and/or the energy storage unit 19. By this means, the electrical energy generated by the photovoltaic assembly 3 may be efficiently used, and at the same time, the electrolysis assembly 2 may be efficiently operated.

For example, if the electrical power generated by the photovoltaic assembly 3 exceeds the power requirements of the electrolysis assembly 2, the excess power may be stored in the energy storage unit 19 and/or be fed to the power grid 50. Accordingly, no power is wasted. In another example, if the electrical power generated by the photovoltaic assembly 3 does not meet the power requirements of the electrolysis assembly 2, additional electrical energy may be drawn from the energy storage unit 19 and/or the power grid 50. Accordingly, reliable operation of the electrolysis assembly 2 in its optimum operating point can be achieved.

In the example of FIG 4, the power grid interface 51 is depicted as being directly connected to the electrolysis unit 1, in particular the power splitter 20. However, it is also conceivable the power grid interface 51 is only indirectly coupled to the electrolysis unit 1. For example, instead of the power grid interface 51, the electrolysis unit 1, in particular the regulation assembly 12, may comprise a coupling interface (not shown) configured to electrically couple the electrolysis unit 1 to a plurality of other electrolysis units, the electrolysis units forming an electrolysis system (cf. FIG 2). In particular, the electrolysis unit 1 can be electrically coupled to the other electrolysis units by means of a central switching unit (not shown) configured to distribute electrical energy generated by the photovoltaic assemblies between the plurality of electrolysis units. Therein, each electrolysis unit comprises such a coupling interface electrically connected to the central switching unit. By electrically coupling each of the electrolysis units to the central switching unit, single electrolysis assemblies can be supplied in a particularly flexible manner, allowing to readily compensate fluxes in the respective power requirements and/or power generation by the photovoltaic assemblies. In particular, the generated electric energy can be put to use in a particularly efficient manner.

In this embodiment, the access to the power grid 50 is preferably established via the central switching unit as well. In particular, the central switching unit may be electrically coupled to the power grid 50 via the power grid interface 51. Accordingly, each of the electrolysis units of the system may feed electrical energy into/draw electrical energy from the power grid 50 via the central switching unit.

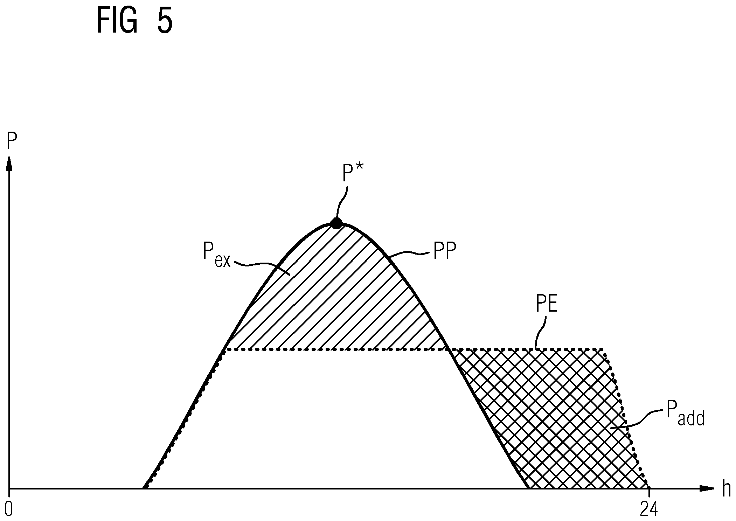

FIG 5 shows an example of the operation of an electrolysis unit. The abscissa corresponds to the daytime in hours h, while the ordinate corresponds to the power P generated by a photovoltaic assembly of the electrolysis unit. The curve PP represents the typical power P generated by the photovoltaic assembly in the course of one day.

The dotted line indicates the power requirement PE of an electrolysis assembly of the electrolysis unit. As apparent from FIG 5, the photovoltaic assembly is configured to have a peak power P* output higher than the power requirement PE of the electrolysis assembly. Accordingly, the power PP generated by the photovoltaic assembly may intermittently be used not only to operate the electrolysis assembly, but for example to also charge an energy storage device of the electrolysis unit. Alternatively or additionally, if the electrolysis unit is electrically coupled to a power grid, the excess power Pₑₓ indicated by the hatching may also be fed into the power grid at any time when the generated power is larger than the power requirement of the electrolysis PE. Accordingly, even if the power PP generated by the photovoltaic assembly exceeds the power requirement PE of the electrolysis assembly, the excess power Pₑₓ may still be efficiently used.

On the other hand, if the power requirement PE of the electrolysis assembly exceeds the power PP generated by the photovoltaic assembly, additional power P_{add} indicated by the crosshatching may be drawn from the energy storage unit, at least until it is depleted. Alternatively or additionally, the additional power P_{add} may also be drawn from the power grid. Even if not shown in the present example, it is of course conceivable that by means of an accordingly configured energy storage device and/or in particular by means of the power grid, substantially permanent operation of the electrolysis assembly can be achieved as well.

Although the invention has been further illustrated and described in detail by the above examples, the invention is not limited by the disclosed examples, and other variations may be derived therefrom by those skilled in the art without departing from the scope of the invention.

## Claims

1. An electrolysis unit (1), comprising:
- an electrolysis assembly (2) comprising a plurality of electrolysis cells (5) configured to generate, upon provision of a direct electrical current, an electrolysis product (6) from a supply medium (7); and
- a photovoltaic assembly (3) being electrically coupled to the electrolysis assembly (2) for operating the electrolysis cells (5) of the electrolysis assembly (2) based on direct electrical current generated by the photovoltaic assembly (3).

2. The electrolysis unit (1) according to claim 1, wherein the photovoltaic assembly (2) comprises a plurality of photovoltaic modules (4) electrically connected in series.

3. The electrolysis unit (1) according to any one of the preceding claims, wherein the photovoltaic assembly (3) comprises a plurality of photovoltaic modules (4) electrically connected in parallel.

4. The electrolysis unit (1) according to any one of claims 2 or 3, comprising a main power line (13) connected to the electrolysis assembly (2), wherein a number of the plurality of photovoltaic modules (4) are electrically connected to a first power collection unit (11a) of the main power line (13) and a same number of the plurality of photovoltaic modules (4) are electrically connected to a second power collection unit (11b) of the main power line (13).

5. The electrolysis unit (1) according to claim 4, wherein the main power line (13) comprises a common line at ground potential, and wherein the first and second power collection units (11a, 11b) have positive or negative polarity, respectively, with respect to the common line.

6. The electrolysis unit (1) according to any one of the preceding claims, wherein the photovoltaic assembly (3) comprises a plurality of photovoltaic units (10) electrically connected in parallel, wherein each of the photovoltaic units (10) comprises a plurality of photovoltaic modules (4) electrically connected in series.

7. The electrolysis unit (1) according to any one of the preceding claims, comprising a regulation assembly (12) electrically arranged in between the photovoltaic assembly (3) and the electrolysis assembly (2), the regulation assembly (12) being configured to adjust the provision of electrical energy to the electrolysis assembly (2).

8. The electrolysis unit (1) according to claim 7, wherein the regulation assembly (12) comprises:
- a regulation power line (14) running electrically parallel to a main power line (13) between the photovoltaic assembly (3) and the electrolysis assembly (2); and
- a DC/DC converter (15) electrically arranged in said regulation power line (14),
the regulation assembly (12) being configured to split off a part of the direct current generated by the photovoltaic assembly (3) into the regulation power line (14) and add an output voltage of the DC/DC converter (15) to a voltage in the main power line (13).

9. The electrolysis unit (1) according to any one of claims 7 or 8, wherein the regulation assembly (12) is configured to adjust the electrical voltage applied to the electrolysis assembly (2) based on an operating state of the photovoltaic assembly (3) and/or an operating state of the electrolysis assembly (2) .

10. The electrolysis unit (1) according to any one of the preceding claims, wherein the peak power (P*) output of the photovoltaic assembly (3) is higher than the power requirement (PE) of the electrolysis assembly (2).

11. The electrolysis unit (1) according to any one of the preceding claims, comprising an energy storage unit (19) configured to:
- store at least a part of the electrical energy provided by the photovoltaic assembly (3) in a first operating mode; and
- provide the electrolysis assembly (2) with at least a part of the stored electrical energy in a second operating mode.

12. The electrolysis unit (1) according to any one of the preceding claims, wherein the electrolysis assembly (2) is connectable to a power grid (50) and configured to operate at least partly with power provided by the power grid (50).

13. An electrolysis system (100), comprising a plurality of electrolysis units (1), in particular according to any one of the preceding claims, wherein each electrolysis unit (1) comprises:
- an electrolysis assembly (2) having a plurality of electrolysis cells (5) configured to generate, upon provision of a direct electrical current, an electrolysis product (6) from a supply medium (7); and
- a photovoltaic assembly (3) being electrically coupled to the electrolysis assembly (2) for operating the electrolysis cells (5) of the electrolysis assembly (2) based on direct electrical current generated by the photovoltaic assembly (3).

14. The electrolysis system (100) according to claim 13, comprising a collection line (102) coupled to the plurality of electrolysis assemblies (2), the collection line (102) being configured to conduct a fluidic electrolysis product (6).

15. A method for generating an electrolysis product (6) with an electrolysis unit (1), in particular with the electrolysis unit (1) according to any one of claims 1 to 12, the method comprising:
- converting electromagnetic radiation, in particular light, into direct current by means of an photovoltaic assembly (3); and
- generating the electrolysis product (6) from a supply medium (7) by means of an electrolysis assembly (2) comprising a plurality of electrolysis cells (5) by providing the direct current generated by means of the photovoltaic assembly (3) to the plurality of electrolysis cells (5).
